# EUROPEAN PATENT APPLICATION

(11) **EP 4 681 869 A1**
(43) Date of publication of application: **21.01.2026**
(21) Application number: 24189329.6
(22) Date of filing: 18.07.2024
(51) Int. Cl.: B23Q 7/14

(54) **A SYSTEM FOR AUTOMATICALLY TRANSPORTING A PALLET APPLIED IN A MACHINE TOOL**

(71) Applicant: United Machining Mill AG, 2504 Biel/Bienne (CH)
(72) Inventor: Meyer, Yvan, 2054 Chézard-St-Martin (CH); Schneider, Kurt, 2564 Bellmund (CH)
(74) Representative: Arend, Christa

(57) **Abstract**

The present invention is related to a system for automatically transporting and changing a pallet with a workpiece mounted thereon applied in a machine tool comprises the following steps:
c) an autonomous vehicle for transporting the pallet including an autonomous vehicle processing unit for controlling the movement of the autonomous vehicle; and
d) a machine tool for machining the workpiece when the pallet is mounted on a machine table of the machine tool including:
a. a pallet changer integrated in the machine tool;
b. a docking space for receiving the autonomous vehicle therein, wherein the autonomous vehicle processing unit is configured to control the autonomous vehicle to enter into the docking space to reach a pre-defined docking position in the docking space;
c. a control unit configured to control the machining of the workpiece; and
d. a pallet changer processing unit configured to control the movement of the pallet changer, wherein the pallet changer has at least one receiving element for receiving the pallet, wherein the pallet changer has a vertical axis and the receiving element is pivotally mounted so as to be pivotal about the vertical axis and also mounted so as to be linearly shiftable in a horizontal plane normal to the vertical axis, wherein the pallet changer processing unit is configured to control the pallet changer to move to a loading position for loading the pallet from the autonomous vehicle to the receiving element or to an unloading position for unloading the pallet from the receiving element to the autonomous vehicle, wherein the pallet changer is configured to move in the vertical direction to directly load the pallet from the autonomous vehicle to the receiving element or to directly unload the pallet from the receiving element to the autonomous vehicle, when the autonomous vehicle is positioned at the docking position.

## Description

### FIELD OF THE INVENTION

The present invention is related to a system and a method for automatically transporting a pallet applied in a machine tool.

### BACKGROUND OF INVENTION

Since many years, automation for machining is highly relevant to increase the productivity. Different automation systems such as robot, automatic pallet changer, and automatic tool changes are widely used in the production. In the machining workshops, a plenty of objects, for example, workpieces, produced parts, machining tools must be transported between different stations and from one machine tool to another machine tool or to a stock. Until now, transporting these objects is not fully automated and still requires manpower. Driverless transport vehicles are already widely applied in many production facilities and logistic centers. Now, they are also intended to be used in the machining workshops.

US 2020/0306903 discloses an arrangement for processing workpieces. The arrangement includes at least one processing machine, a machine magazine assigned to a respective processing machine for accommodating processing tools. The arrangement further includes a robot and a driverless base frame for carrying the robot. In this system, the robot is integrated on the driverless vehicle. The driverless vehicle must carry additional loads, namely robot all the time, this consumes unnecessary power for driving the vehicle.

### SUMMARY OF THE INVENTION

It is an objective of this invention to provide a system for automatically transporting and changing a pallet for mounting a workpiece thereon with a simple design. It is a further objective of the invention to provide a system for automatically transporting and changing a pallet with an improved safety.

According to the present invention, these objectives are achieved through the features of independent claims. In addition, further advantageous embodiments follow from the dependent claims and the description.

In the present invention, a system for automatically transporting and changing a pallet for mounting a workpiece thereon comprises an autonomous vehicle for transporting the pallet including an autonomous vehicle processing unit for controlling the movement of the autonomous vehicle and a machine tool for machining the workpiece when the pallet is mounted on a machine table of the machine tool.

The machine tool includes an integrated pallet changer, a docking space for receiving the autonomous vehicle therein and a control unit configured to control the machining of the workpiece, and a pallet changer processing unit configured to control the movement of the pallet changer.

The autonomous vehicle processing unit is configured to control the autonomous vehicle to enter into the docking space to reach a pre-defined docking position in the docking space.

The pallet changer has at least one receiving element for receiving the pallet. The pallet changer has a vertical axis, and the receiving element is pivotally mounted so as to be pivotal about the vertical axis, in particular the receiving element is mounted so as to be linearly shiftable in a horizontal plane normal to the vertical axis. The pallet changer processing unit is configured to control the pallet changer to move to a loading position for loading the pallet from the autonomous vehicle to the receiving element and to an unloading position for unloading the pallet from the receiving element to the automatic vehicle. The pallet changer is configured to move in the vertical direction to load the pallet from the autonomous vehicle to the receiving element or to unload the pallet from the receiving element to the autonomous vehicle, when the autonomous vehicle is positioned at the docking position. In particular, the vertical movement is achieved by applying a hydraulic cylinder. However, other solutions can be utilized to realize the vertical movement of the pallet changer.

In one preferred variant, the pallet changer is configured to move in the vertical direction to directly load the pallet from the autonomous vehicle to the receiving element or to directly unload the pallet from the receiving element to the autonomous vehicle, when the autonomous vehicle is positioned at the docking position.

Preferably, the pallet changer processing unit is fully integrated in the control unit of the machine tool.

Loading operation is conducted for loading the pallet with for example a new workpiece to be machined. This pallet is carried and transported by the autonomous vehicle to the machine tool, in which the pallet should be mounted. When the receiving element is positioned at the loading position and the autonomous vehicle reaches the docking position, the receiving element is positioned already at the right position in the horizontal direction. The receiving element is then controlled to move upwardly in the vertical direction to automatically receive the pallet thereon. By this way, the pallet can be directly transferred from the autonomous vehicle to the pallet changer. It provides a simple process and can save machining time. Additionally, no additional device must be mounted on the autonomous vehicle for loading or unloading the pallet.

Unloading operation is conducted for unloading the pallet with for example a machined part onto the autonomous vehicle. The pallet must be transported by the autonomous vehicle from the machine tool to another station of the workshop. This pallet is first removed from the machine table by the pallet changer and stored in one receiving element. When the receiving element is positioned at the unloading position and the autonomous vehicle is positioned at the docking position, the receiving element is positioned already at the right position in the horizontal direction. The receiving element is then controlled to move downwardly in the vertical direction to automatically transfer the pallet to the autonomous vehicle.

The loading position and the unloading position are defined horizontal positions at which the receiving elements are positioned over the docking space and for loading and unloading no horizontal shifting is required.

In a preferred variant, the loading position and unloading position are defined as the same position.

In this system, the pallet changer is integrated inside the machine tool. Combining the machine tool with the integrated pallet changer and the autonomous vehicle provides a simple design. Additionally, such system provides the advantage that the autonomous vehicle must not be equipped with robot or pallet changer which increases the complexity of the autonomous vehicle and the weight to be carried by the autonomous vehicle. Moreover, it is not needed to arrange additional external devices in the proximity of the machine tool.

The receiving element is pivotally mounted on the vertical axis so as to be pivotal about the vertical axis. The receiving element can receive the pallet mounted on the machine table and rotate about the vertical axis for e.g. 180 degrees. In particular, the receiving element can further move linearly to the unloading position, if needed. In some application, the receiving element can receive the pallet mounted on the machine table and rotate about the vertical axis and the receiving element is located already at the unloading position. Only one vertical movement is required to unload the pallet on the autonomous vehicle. Moreover, the receiving element can receive the pallet carried by the autonomous vehicle and rotate about the vertical axis for e.g. 180 degrees by a single vertical movement. In particular, the receiving element can further move linearly to the machine table, if needed. In some application, the receiving element can receive the pallet and rotate about the vertical axis and the receiving element is located already above the machine table. Only one vertical movement is required to unload the pallet on the machine table.

When the pallet changer is positioned at the loading or unloading position, one of the receiving elements extends above the docking space and is positioned over the autonomous vehicle when it reaches the docking position. Thus, only a vertical movement is required to load or unload the pallet. The system provides a simple operation for loading and unloading. Especially, no further device is required since the pallet can be directly transferred between the receiving element of the pallet changer and the autonomous vehicle. Thus, a simple vertical movement allows loading or unloading the pallet without complex movement.

Additionally, the pallet changer can be moved to the loading or unloading position in advance before the autonomous vehicle enters into the machine tool. When it reaches the docking position, the pallet changer only needs to lift the pallet for loading or low down the pallet for unloading, which can be accomplished in a short time. Hence, the autonomous vehicle stays in the machine tool only for a very short time and the idle time of the autonomous vehicle can be saved.

In one variant, the docking space is arranged in the front area of the machine tool, in the rear area of the machine tool or the side area of the machine tool. The pallet changer is integrated within the machine tool. However, it can be arranged in different areas inside the machine tool. The front area, rear area and side area are defined relative to the machine table. Correspondingly, the docking space is provided close to the pallet changer to ease the loading and unloading operation.

In a preferred variant, a docking station for docking the autonomous vehicle is provided inside the machine tool. When the autonomous vehicle enters into the docking space, it is controlled to be docked at the docking station. In this way, the autonomous vehicle can be more precisely positioned at the pre-defined docking position and the transferring the pallet between autonomous vehicle is more reliable.

In particular, the docking station is mounted in the docking space.

Advantageously, the receiving element has a gripper, on each of which a coupling element is provided for engaging with the pallet. In particular, a coupling means is provided on the pallet for being engaged with the coupling elements on the gripper. Providing the coupling elements on the gripper can ease the loading and unloading because the positioning inaccuracy of the autonomous vehicle can be compensated.

In particular, the coupling element has a conical shape. The coupling means on the pallet has a complementary shape for engaging with the coupling element, such as a hole or a recess.

In one variant, the coupling element is provided on the top surface of the gripper and the gripper can be engaged with the pallet from the lower side of the pallet. In particular, the autonomous vehicle is provided with a plurality of supporting elements fixed on the top surface of the autonomous vehicle such that the pallet can be carried on the supporting elements. The supporting elements stand on the top surface of the vehicle with a defined height, such that the gripper be inserted into the space between the lower surface of the pallet and the top surface of the autonomous vehicle.

In one variant, the gripper can grasp the pallet from the side, e.g. on two side surfaces of the pallet. In particular, on each side surface a groove is provided such that the gripper can enter into the groove and take over the pallet from the side. For loading, the pallet changer is first positioned at the loading position. When the autonomous vehicle enters into the docking space, the gripper automatically enters into the grooves on the side surface. For unloading the pallet is first dropped on the autonomous vehicle. When the autonomous vehicle leaves the docking space, the gripper is automatically taken out of the grooves.

In one variant, the machine tool is a so-called gantry machine having two side walls. The front machining area and the rear supply area are divided by a transverse wall, or a door arranged between the side walls. In one variant, the inner space of the machine tool is divided into a front machining area and a rear or side supply area for the pallet changer. The pallet changer is mounted in the rear supply area and can be rotated in this area because the rear supply area provides enough space for pivoting the two receiving elements. Additionally, the receiving element can be shifted horizontally from the rear supply area to the front machining area. In particular, the pallet changer can be shifted horizontally in the opposite direction to reach the loading position and unloading position. In this variant, the docking space is also arranged in the rear area of the machine tool.

In some embodiments, a first detecting means is arranged in the machine tool for detecting the docking status of the autonomous vehicle. In particular, the information detected by the first detecting means can be communicated to the pallet changer processing unit. When the docking status shows that the autonomous vehicle is docked at the docking station, the pallet changer processing unit is configured to activate the loading or unloading operation, namely, to move the receiving element upwardly or downwardly to the corresponding vertical position.

In a preferred variant, the first detecting means is an optical detecting device, in particular the first detecting means is a photelectric sensor.

Preferably, the machine tool includes an automatic door for allowing the autonomous vehicle to enter into the machine tool toward the docking space.

Moreover, the automatic door is controlled by the control unit of the machine tool and can only be opened under a defined condition. For example, if any object is located in the docking space, the automatic door remains closed such that the autonomous vehicle cannot enter into the docking space. This can prevent the collision between the autonomous vehicle and any object. The safety of the operation is ensured.

Especially, the control unit of the machine tool is configured to receive the position information of the autonomous vehicle and to open the automatic door if the autonomous vehicle is positioned at a defined position in the proximity of the automatic door. The autonomous vehicle processing unit communicates the positioning information to the control unit of the machine tool. The control unit is configured to verify if the autonomous vehicle is allowed to enter the machine tool. For example, if another autonomous vehicle is already located in the machine tool, the automatic door will stay closed to prevent the collision of two autonomous vehicles.

In some embodiments, the machine tool includes a second detecting means arranged in the docking space for detecting any object located in the docking space.

In one variant, the machine tool includes a second detecting means arranged in the docking space for detecting the pallet located on the autonomous vehicle for controlling the movement of the pallet changer, in particular for controlling the movement of the receiving element.

In particular, the control unit of the machine tool is configured to further receive the information obtained by the second detecting means and to control the automatic door based on this information. For example, if an operator enters into the docking space, the second detecting means communicates this information to the control unit of the machine tool. If the autonomous vehicle is positioned in the front of the automatic door, the control unit is configured to verify if any object is located in the docking space based on the data provided by the second detecting means. If any object is located in the docking space, the automatic door maintains closed to avoid any collision.

In a preferred variant, the second detecting means is an optical detecting device, in particular the second detecting means is a photelectric sensor.

In some embodiments, the autonomous vehicle processing unit is configured to communicate with the control unit of the machine tool and/or with the pallet changer processing unit.

In one variant, the pallet changer processing unit is configured to receive the docking status of the autonomous vehicle and to load or unload the pallet if the autonomous vehicle is docked at the docking station, wherein for unloading the pallet changer is controlled to move downwardly in the Z-direction for a defined distance, wherein for loading the pallet changer is controlled to move upwardly in the Z-direction for a defined distance.

The present invention is directed to a method for automatically transporting and changing a pallet for mounting a workpiece thereon by a system including an automatic vehicle for transporting the pallet and a machine tool for machining the workpiece. The machine tool includes a pallet changer integrated in the machine tool, a docking space for receiving the automatic vehicle therein, a control unit configured to control the machining of the workpiece and a pallet changer processing unit configured to control the movement of the pallet changer. The pallet changer has at least two receiving elements for receiving the pallet. The pallet changer has a vertical axis, and the receiving element is pivotally mounted so as to be pivotal about a vertical axis, in particular the receiving element is mounted so as to be linearly shiftable in a horizontal plane normal to the vertical axis. The pallet changer processing unit is configured to position the receiving element to a loading position for loading the pallet from the autonomous vehicle to the receiving element or to an unloading position for unloading the pallet from the receiving element to the autonomous vehicle. The method comprises the steps of: controlling the pallet changer to move to the loading position or unloading position; controlling the autonomous vehicle to enter into the machine tool to be positioned in the docking space; and loading the pallet from the autonomous vehicle onto the receiving element by moving the receiving element upwardly in the vertical direction or unloading the pallet from the receiving element onto the autonomous vehicle by moving the receiving element downwardly in the vertical direction. This method provides the possibility to load and unload the pallet to the autonomous vehicle without any intermediate storage station. During the machining, the autonomous vehicle can transport the pallet to the machine tool and one receiving element can take away the pallet by a lifting movement. Then the autonomous vehicle can leave this machine to transport further pallet or part to the other machine tool.

In particular, the pallet changer is first moved to the loading position or unloading position before the autonomous vehicle enters into the docking space.

In one variant, the method further comprises the steps of: controlling the autonomous vehicle to move to the machine tool; receiving the information detected by the second detecting means by the control unit; opening the automatic door if no object is detected by the second detecting means and controlling the autonomous vehicle to inter into the docking space.

In a preferred variant, the method further comprises the steps of:
a. controlling the pallet changer to move to the loading position, wherein a first receiving element of the pallet changer is positioned over the docking space when the pallet changer reaches the loading position;
b. controlling the autonomous vehicle to move into the machine tool towards the docking space;
c. detecting the docking status of the autonomous vehicle by a first detecting means;
d. loading a first pallet carried by the autonomous vehicle from it to a first receiving element;
e. controlling the pallet changer to move to the machining area;
f. loading a second pallet with a machined part arranged on the machine table on a second receiving element;
g. pivoting the first receiving element and the second receiving element about the vertical axis such that the first receiving element is positioned above the machine table; and
h. loading the first pallet received in the first receiving element on the machine table.

In one variant, after the pallet is transferred from the autonomous vehicle to the first receiving element the autonomous vehicle waits in the docking space until the second receiving element with the machined part is moved to the unloading position and is controlled to unload the second pallet onto the autonomous vehicle.

In another variant, after the pallet is transferred from the autonomous vehicle to the first receiving element the autonomous vehicle leaves the docking space. The second receiving element is controlled to move to the unloading position and waits for the next autonomous vehicle for unloading.

### BRIEF DESCRIPTION OF THE DRAWINGS

In the following, a more particular description of the present invention is further described. The embodiments are described and explained with details with reference to accompanying drawings in which:
- Fig. 1: illustrates schematically a top view of the system including a machine tool with an integrated pallet changer and an autonomous vehicle;
- Fig. 2: illustrates schematically a top view of the system in a state that the autonomous vehicle is at the outside of the machine tool;
- Fig. 3: illustrates schematically a top view of the system in a state that the autonomous vehicle is within the machine tool;
- Fig. 4: illustrates schematically a side view of the autonomous vehicle;
- Fig. 5: illustrates schematically a side view of the system in which the pallet changer is positioned at the unloading position;
- Fig. 6: illustrates schematically a side view of the system in a state that a pallet is loaded on the pallet changer;
- Fig. 7: illustrates schematically a side view of the system in a state that the pallet changer is rotated after the loading process; and
- Fig. 8: illustrates schematically a side view of the system in a state that the pallet changer is moved to the machine table.

### EXEMPLARY EMBODIMENTS

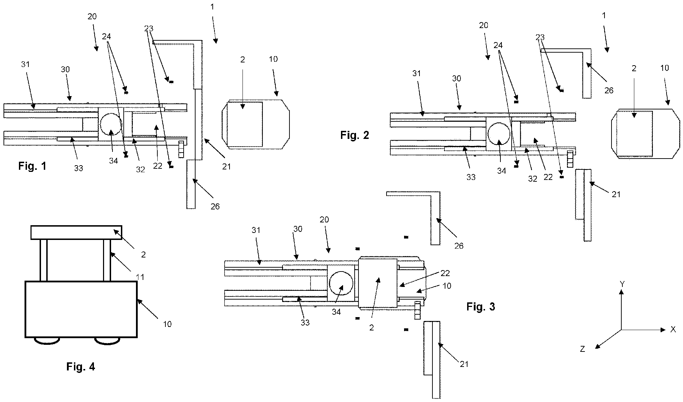

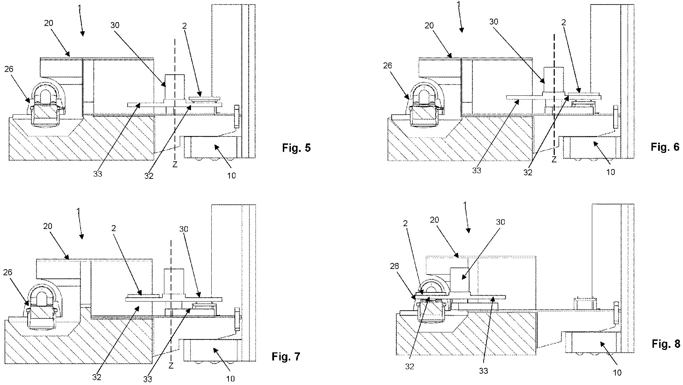

Figures 1, 2 and 3 illustrate schematically top views of a system 1 of the present invention. They show the system in miscellaneous operating states. Figures 6, 7, 8 and 9 illustrate schematically side views of the system in different operating states. These figures are simplified schematic views, thus not all details of the machine tool are shown in the figures.

As shown in figure 1 the system comprises a machine tool 20 including a pallet changer 30 integrated therein and an autonomous vehicle 10. The pallet changer can be integrated in the machine tool having different constructions and can be mounted in the different positions of the machine tool. In the example shown in the figures a machine tool includes a front area and a rear area. The front area is the machining area, in which a machine table is arranged. The pallet changer is mounted in the rear area. An automatic door 21 is provided on the back side of the machine tool, in particular on the back wall 26 of the machine tool. In order to allow the autonomous vehicle to enter into the machine tool, a docking space 22 is foreseen in the rear area between the pallet changer and the automatic door.

The pallet changer has a first gripper 32 and a second gripper 33 arranged on a horizontal plane, namely X-Y plane. The two grippers are adapted to turn about a vertical axis Z. The pallet changer has a lifting means 34 on which a linear guide 31 is arranged for horizontal linear guidance of the grippers. In further a first detecting means 24 and a second detecting means 23 are provided in the rear area in the proximity of the pallet changer, for example mounted on the side wall of the machine tool. The second detecting means 23 is arranged in the proximity of the automatic door to detect if any objects enter into the docking area. The first detecting means is arranged closely to the end of the docking space to detect if the autonomous vehicle reaches a defined docking position.

The autonomous vehicle carries a pallet 2 on the top surface. In this example, the pallet is held directly on the autonomous vehicle. However, it is also possible to provide a movable device which is carried by the autonomous vehicle and can follow the movement of the autonomous vehicle. In this case the pallet is mounted on the moveable device, such as a cart.

Figure 2 shows the state that the automatic door is opened to allow the autonomous vehicle to enter into the docking space.

Figure 3 shows the state that the autonomous vehicle enters into the docking area and reaches the docking position.

Figure 4 shows one example of the autonomous vehicle equipped with a plurality of supporting element 11 and the pallet is carried by the supporting element.

Figures 5 and 6 illustrate how the pallet is loaded from the autonomous vehicle onto the pallet changer.

For loading or unloading, the pallet changer is controlled in a manner that the gripper is shifted in the horizontal direction towards the autonomous vehicle to a loading or unloading position. When the autonomous vehicle 10 enters into the docking space, the first gripper 32 automatically enters into the space between the top surface of the autonomous vehicle and the bottom surface of the pallet 2 carried by the supporting elements. Figure 5 shows this state.

The grippers are controlled to move upwardly in the vertical direction to take away the pallet from the autonomous vehicle. The figure 6 shows this state. Afterwards, the vehicle can leave the machine tool for transporting other objects. It is also possible to keep the vehicle at the docking position to wait for the unloading operation.

If the coupling means and coupling elements are provided, they are engaged when the grippers are moved upwardly in the vertical direction. This is a preferred variant but not mandatory.

When the pallet is transferred by from the autonomous vehicle onto the pallet changer, the pallet changer is rotated about the vertical axis A for 180 degrees as shown in the figure 7. The positions of the first gripper 32 carrying the pallet and the second gripper 33 without carrying any object are exchanged.

Since the pallet changer is mounted on the rear arear of the machine, the pallet changer is further moved horizontally towards the front area of the machine tool in order to load the pallet onto the machine table. Figure 8 shows the position when the pallet is located above the machine table. The pallet changer is controlled to move downwardly in the vertical direction to load the pallet on the machine table.

### LIST OF REFERENCES

- 1: system
- 2: pallet
- 10: autonomous vehicle
- 11: supporting element
- 20: machine tool
- 21: automatic door
- 22: docking space
- 23: a first detecting means
- 24: a second detecting means
- 25: machine bed
- 26: machine table
- 30: pallet changer
- 31: linear guide
- 32: first gripper
- 33: second gripper
- 34: coupling element

## Claims

1. A system (1) for automatically transporting a pallet (2) with a workpiece mounted thereon applied in a machine tool (20) comprising:
a) an autonomous vehicle (10) for transporting the pallet including an autonomous vehicle processing unit for controlling the movement of the autonomous vehicle; and
b) a machine tool for machining the workpiece when the pallet is mounted on a machine table of the machine tool including:
a. a pallet changer (30) integrated in the machine tool;
b. a docking space (22) for receiving the autonomous vehicle therein, wherein the autonomous vehicle processing unit is configured to control the autonomous vehicle to enter into the docking space to reach a pre-defined docking position in the docking space;
c. a control unit configured to control the machining of the workpiece; and
d. a pallet changer processing unit configured to control the movement of the pallet changer, wherein the pallet changer has at least one receiving element (31) for receiving the pallet, wherein the pallet changer has a vertical axis and the receiving element is pivotally mounted so as to be pivotal about the vertical axis, in particular the receiving element is mounted so as to be linearly shiftable in a horizontal plane normal to the vertical axis, wherein the pallet changer processing unit is configured to control the pallet changer to move to a loading position for loading the pallet from the autonomous vehicle to the receiving element or to an unloading position for unloading the pallet from the receiving element to the autonomous vehicle, wherein the pallet changer is configured to move in the vertical direction to load the pallet from the autonomous vehicle to the receiving element or to unload the pallet from the receiving element to the autonomous vehicle, when the autonomous vehicle is positioned at the docking position.

2. The system according to claim 1, wherein a docking station for docking the autonomous vehicle is arranged within the machine tool, in particular in the docking space of the machine tool.

3. The system according to claim 2, wherein a first detecting means (23) is arranged in the machine tool for detecting the docking status of the autonomous vehicle.

4. The system according to one of claims 1 to 3, wherein the receiving element has a gripper, on each of which a coupling element is provided for coupling with the pallet, in particular the coupling element has a conical shape.

5. The system according to one of claims 1 to 4, wherein the machine tool includes an automatic door for allowing the autonomous vehicle to enter into docking space of the machine tool, in particular the automatic door is arranged on the rear of the machine tool, in the front of the machine tool or on the side of the machine tool.

6. The system according to one of claims 1 to 5, wherein the machine tool includes a second detecting means (24) arranged in the docking space for detecting an object located in the docking space.

7. The system according to one of claims 1 to 5, wherein the machine tool includes a second detecting means (24) arranged in the docking space for detecting the pallet located on the autonomous vehicle for controlling the movement of the pallet changer, in particular for controlling the movement of the receiving element.

8. The system according to claim 6 or 7, wherein the second detecting means is an optical detecting device, in particular the first detecting means and/or the second detecting means is a photelectric sensor.

9. The system according to one of claims 3 to 8, wherein the first detecting means is an optical detecting device, in particular the first detecting means is a photelectric sensor.

10. The system according to one of claims 5 to 9, wherein the control unit of the machine tool is configured to receive the position information of the autonomous vehicle and to open the automatic door if the autonomous vehicle is positioned at a defined position in the proximity of the automatic door.

11. The system according to claim 9, wherein the control unit of the machine tool is configured to further receive the information obtained by the second detecting means and to control the automatic door based on this information.

12. The system according to one of claims 1 to 11, wherein the pallet changer processing unit is configured to receive the docking status of the autonomous vehicle and to load or unload the pallet if the autonomous vehicle is docked at the docking station, wherein for unloading the pallet changer is controlled to move downwardly in the Z-direction for a defined distance, wherein for loading the pallet changer is controlled to move upwardly in the Z-direction for a defined distance.

13. A method for automatically transporting and changing a pallet for mounting a workpiece thereon by a system including an automatic vehicle for transporting the pallet and a machine tool for machining the workpiece, wherein the machine tool includes an integrated pallet changer, a docking space for receiving the autonomous vehicle therein, a control unit configured to control the machining of the workpiece and a pallet changer processing unit configured to control the movement of the pallet changer, wherein the pallet changer has at least one receiving element for receiving the pallet, wherein the pallet changer has a vertical axis and the receiving element is pivotally mounted so as to be pivotal about a vertical axis, in particular the receiving element is mounted so as to be linearly shiftable in a horizontal plane normal to the vertical axis, wherein the pallet changer processing unit is configured to control the pallet changer to move to a loading position for loading the pallet from the autonomous vehicle to the receiving element and to an unloading position for unloading the pallet from the receiving element to the autonomous vehicle comprising:
a. controlling the pallet changer to move to the loading position or unloading position;
b. controlling the autonomous vehicle to enter into the machine tool to be positioned in the docking space; and
c. loading the pallet from the autonomous vehicle directly onto the receiving element by moving the receiving element upwardly in the vertical direction or unloading the pallet from the receiving element directly onto the autonomous vehicle by moving the receiving element downwardly in the vertical direction.

14. The method according to claim 13, wherein the machine tool comprises an automatic door and a second detecting means arranged in the docking space for detecting an object located in the docking space, wherein the method further comprises:
a. controlling the autonomous vehicle to move to the machine tool;
b. receiving the information detected by the second detecting means by the control unit;
c. opening the automatic door if no object is detected by the second detecting means; and
d. controlling the autonomous vehicle to enter into the docking space.

15. The method according to claim 13 or 14, wherein the method further comprises:
a. controlling the pallet changer to move to the loading position, wherein a first receiving element of the pallet changer is positioned over the docking space when the pallet changer reaches the loading position;
b. controlling the autonomous vehicle to move into the machine tool towards the docking space;
c. detecting the docking status of the autonomous vehicle by a first detecting means;
d. loading a first pallet carried by the autonomous vehicle onto the first receiving element by a lifting movement;
e. controlling the pallet changer to move to the machining area;
f. loading a second pallet with a machined part arranged on the machine table on a second receiving element;
g. pivoting the first receiving element and the second receiving element about the vertical axis such that the first receiving element is positioned above the machine table; and
h. loading the first pallet received in the first receiving element on the machine table.
